# EUROPEAN PATENT SPECIFICATION

(11) **EP 4 209 919 B1**
(45) Date of publication and mention of the grant of the patent: **08.01.2025**
(21) Application number: 21863542.3
(22) Date of filing: 24.08.2021
(51) Int. Cl.: G06F 16/215, G06F 16/22, G06F 16/27

(54) **DATA DEDUPLICATION METHOD, NODE, AND COMPUTER READABLE STORAGE MEDIUM**
DATENDEDUPLIZIERUNGSVERFAHREN, KNOTEN UND COMPUTERLESBARES SPEICHERMEDIUM
PROCÉDÉ DE DÉDUPLICATION DES DONNÉES, NOEUD ET SUPPORT D'ENREGISTREMENT LISIBLE PAR ORDINATEUR

(30) Priority: 03.09.2020 CN 202010914269
(43) Date of publication of application: 12.07.2023
(73) Proprietor: ZTE Corporation, Shenzhen, Guangdong 518057 (CN)
(72) Inventor: XU, Xingbao, Shenzhen, Guangdong 518057 (CN); MA, Yuwei, Shenzhen, Guangdong 518057 (CN); WANG, Haijun, Shenzhen, Guangdong 518057 (CN); ZHU, Shoutao, Shenzhen, Guangdong 518057 (CN); SHI, Wen, Shenzhen, Guangdong 518057 (CN); ZHANG, Jun, Shenzhen, Guangdong 518057 (CN)
(74) Representative: Savi, Massimiliano
(86) International application number: PCT/CN2021/114349
(87) International publication number: WO 2022/048475

(56) References cited:
- CN-A- 108 664 555
- CN-A- 109 800 218
- CN-A- 110 245 129
- CN-A- 111 522 791
- US-A1- 2012 166 403
- US-A1- 2016 055 200
- US-A1- 2019 026 305
- US-B1- 9 684 668

## Description

### TECHNICAL FIELD

Embodiments of the present disclosure relate to, but are not limited to, the technical field of data processing, in particular to a method for data deduplication, a node, and a computer-readable storage medium.

### BACKGROUND

A distributed database is a system formed by the connection of several database nodes through a network, and is capable of providing database services to the outside world. In the distributed database, a user request task can be divided into several small tasks and distributed to several nodes in the system for concurrent execution, and then one of the nodes is responsible for summarizing and merging calculation results of all the nodes, so as to obtain the performance and capacity that a stand-alone database cannot achieve. Therefore, the distributed database can improve the performance of data operations such as retrieval, filtering, ranking, summarization, statistics, etc.

However, for deduplication processing, which is frequent processing in the database, because the task of deduplication processing does not exhibit the characteristic of distributed task decomposition, in some cases, it is challenging to effectively improve the efficiency of deduplication processing by means of task decomposition, so the efficiency of the deduplication processing is not effectively improved. Therefore, it is important to improve the processing efficiency of deduplication processing by means of a distributed database. US 2012/166403 A1 (KIM, Mi-Jeom et al.) discloses a proxy based deduplication in a distributed storage system for storing objects in a set of data nodes distributed over a network.

### SUMMARY

The following is a summary of the subject matter described in detail herein. This summary is not intended to limit the scope of protection of the claims. The object of the invention is solved by the features of the independent claims. Further embodiments are the subject-matter of the dependent claims.

Provided are a method for data deduplication, a node, and a computer-readable storage medium in some embodiments of the present disclosure, which can improve the efficiency of deduplication processing by means of a distributed database.

In accordance with an aspect of the present disclosure, an embodiment provides a method for data deduplication, which is performed by a proxy node in a distributed database. The includes:
acquiring deduplication operation request information;
sending request operation information carrying distributed deduplication operation information to each of at least one serving node in the distributed database according to the deduplication operation request information, such that the respective serving node preprocesses record information meeting a deduplication condition in the respective serving node according to the distributed deduplication operation information in the request operation information, to obtain preprocessed record information for each record information, where the preprocessed record information includes the record information and a first Hash value generated from a Hash calculation on the record information;
receiving the preprocessed record information sent by each of the at least one serving node, and summarizing the preprocessed record information into a preset processing storage area; and
traversing the preprocessed record information in the processing storage area, and for each preprocessed record information, performing deduplication processing on the record information in the preprocessed record information according to the first Hash value in the preprocessed record information.

In accordance with another aspect of the present disclosure, an embodiment further provides a method for data deduplication, which is performed by a serving node in a distributed database. The method includes:
acquiring request operation information sent by a proxy node in the distributed database, where the request operation information carries distributed deduplication operation information;
preprocessing each record information meeting a deduplication condition according to the distributed deduplication operation information in the request operation information, to obtain preprocessed record information for each record information, where the preprocessed record information includes the record information and a first Hash value generated from a Hash calculation on the record information; and
sending the preprocessed record information to the proxy node, such that the proxy node summarizes the preprocessed record information into a preset processing storage area and traverses the preprocessed record information in the processing storage area, and for each preprocessed record information, performing deduplication processing on the record information in the preprocessed record information according to the first Hash value in the preprocessed record information.

In accordance with yet another aspect of the present disclosure, an embodiment further provides a node. The node includes, a memory, a processor, and a computer program stored in the memory and executable by the processor which, when executed by the processor, causes the processor to carry out any one of the methods described above.

In accordance with yet another aspect of the present disclosure, an embodiment further provides a computer-readable storage medium storing a computer-executable instruction which, when executed by a processor, causes the processor to carry out any one of the methods described above.

Other features and advantages of the present disclosure will be set forth in the following description, and partly become obvious from the description, or understood by implementing the present disclosure. The objects and other advantages of the present disclosure can be realized and obtained by the structure particularly pointed out in the description, claims, and accompanying drawings.

### BRIEF DESCRIPTION OF DRAWINGS

The drawings are provided for an understanding of the technical schemes of the present disclosure, and constitute a part of the description. The drawings and the embodiments of the present disclosure are intended to illustrate the technical schemes of the present disclosure, and do not constitute a limitation to the technical schemes of the present disclosure.
FIG. 1 depicts a schematic diagram showing a system architecture in which a method for data deduplication according to an embodiment of the present disclosure is performed;
FIG. 2 depicts a flowchart showing a method for data deduplication performed by a proxy node according to an embodiment of the present disclosure;
FIG. 3 depicts a flowchart showing the deduplication processing according to a first Hash value in a method for data deduplication according to another embodiment of the present disclosure;
FIG. 4 depicts a flowchart showing the deduplication processing according to an offset address value in a method for data deduplication according to yet another embodiment of the present disclosure;
FIG. 5 depicts a flowchart showing the deduplication processing according to an offset address value in a method for data deduplication according to yet another embodiment of the present disclosure;
FIG. 6 depicts a flowchart showing the deduplication processing according to a first comparison result in a method for data deduplication according to yet another embodiment of the present disclosure;
FIG. 7 depicts a flowchart showing the deduplication processing according to a first comparison result in a method for data deduplication according to yet another embodiment of the present disclosure;
FIG. 8 depicts a schematic diagram showing a Hash address array according to an embodiment of the present disclosure;
FIG. 9 depicts a flowchart showing the deduplication processing according to an offset address value in a method for data deduplication according to another embodiment of the present disclosure;
FIG. 10 depicts a flowchart showing the deduplication processing according to an offset address value in a method for data deduplication according to yet another embodiment of the present disclosure;
FIG. 11 depicts a flowchart showing the deduplication processing according to a second comparison result in a method for data deduplication according to yet another embodiment of the present disclosure;
FIG. 12 depicts a flowchart showing the deduplication processing according to a second comparison result in a method for data deduplication according to yet another embodiment of the present disclosure;
FIG. 13 depicts a flowchart showing the deduplication processing according to a third comparison result in a method for data deduplication according to yet another embodiment of the present disclosure;
FIG. 14 depicts a flowchart showing the deduplication processing according to a third comparison result in a method for data deduplication according to yet another embodiment of the present disclosure;
FIG. 15 depicts flowchart showing a method for data deduplication performed by a proxy node according to yet another embodiment of the present disclosure; and
FIG. 16 depicts a flowchart showing a method for data deduplication performed by a serving node according to an embodiment of the present disclosure.

### DETAILED DESCRIPTION

The present disclosure will be illustrated in conjunction with the accompanying drawings and embodiments. It should be understood that the embodiments described herein are only illustrative but are not a limitation of the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are intended to distinguish similar objects, and are not necessarily intended to describe a specific sequence or a precedence order.

Provided are a method for data deduplication, a node, and a computer-readable storage medium in some embodiments of the present disclosure. Upon acquiring deduplication operation request information, a proxy node first reconstructs the deduplication operation request information into request operation information carrying distributed deduplication operation information, then sends the request operation information carrying the distributed deduplication operation information to each serving node in a distributed database, such that each serving node performs a Hash calculation on record information meeting a deduplication condition in the respective serving node according to the distributed deduplication operation information, and combines an obtained first Hash value with the record information to form preprocessed record information. Therefore, the preprocessed record information received by the proxy node already carries a Hash calculation result, thereby eliminating the process of performing a Hash calculation on the record information by the proxy node. Thus, after receiving the preprocessed record information, the proxy node can immediately perform the deduplication processing on the preprocessed record information. Therefore, according to the schemes of some embodiments of the present disclosure, the parallel computing capability of the distributed database can be fully utilized to quickly obtain full result set data containing Hash calculation results, so that the efficiency of deduplication processing can be improved by means of the distributed database.

Some embodiments of the present disclosure will be illustrated in conjunction with the accompanying drawings below.

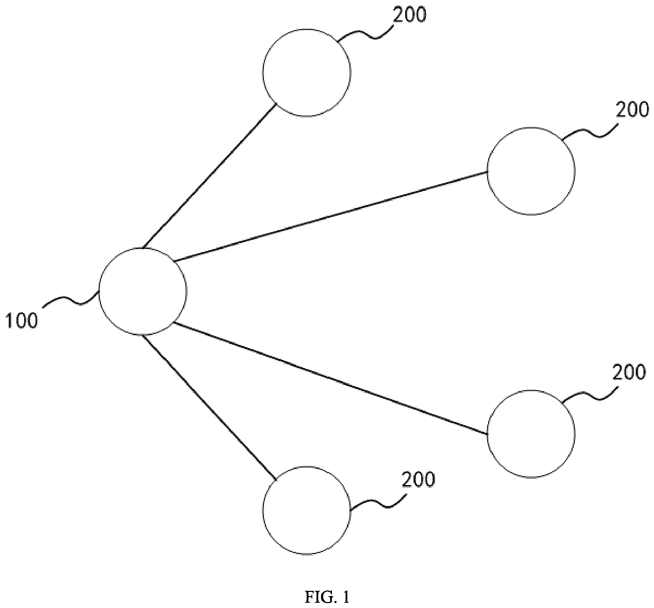

FIG. 1 depicts a schematic diagram showing a system architecture where the method for data deduplication according to an embodiment of the present disclosure can be performed. As shown in FIG. 1, the system architecture includes a proxy node 100 and several serving nodes 200 connected with the proxy node 100, and the proxy node 100 and the serving nodes 200 form a distributed database. The proxy node 100 can parse request information from a client, distribute the request information to the serving nodes 200, and perform data processing tasks. Each serving node 200 can perform a data processing task associated with the respective serving node, according to the request information from the proxy node 100, and send a data result of the performance of the data processing task, to the proxy node 100 for summarization and subsequent related processing.

Three hybrid storage areas and an array memory space are preset in the proxy node 100. The three hybrid storage areas are a processing storage area, a pending storage area and a result storage area. The hybrid storage areas form a combination of space combining two types of storage, i.e., a computer memory and a hard disk for data storage, where data is stored in the hard disk in the form of a file, and some spaces in the memory are served as a file reading/writing cache for the file. The hybrid storage areas can make comprehensive use of the speed advantage of the memory and the space advantage of the hard disk, which can not only avoid excessive consumption of memory space, but also improve the reading/writing speed of data. The processing storage area is configured to store data sets that are to be processed in a current round, the pending storage area is used to store data sets that are to be processed in a subsequent round. The result storage area is configured to store data sets that have been deduplicated. The array memory space is configured to store a Hash address array which includes an offset address item and a Hash value item, where the offset address item is configured to record address offset values of the data sets that have been deduplicated in the result storage area, and the Hash value item is configured to record Hash values corresponding to the data sets stored in the result storage area. Through the cooperation of the processing storage area, the pending storage area, the result storage area and the Hash address array, the proxy node 100 can directly perform deduplication processing on the preprocessed record information after receiving the preprocessed record information sent by the serving nodes 200.

The system architecture and application scenarios described in the embodiments of the present disclosure are intended to illustrate the technical schemes in the embodiments of the present disclosure, and are not intended to limit the technical schemes according to various embodiments of the present disclosure. Those having ordinary skills in the art will be appreciated that, with the evolution of the system architecture and the emergence of new application scenarios, the technical schemes according to various embodiments of the present disclosure are also applicable to similar technical problems.

Those having ordinary skills in the art can understand that the system architecture shown in FIG. 1 does not constitute a limitation to various embodiments of the present disclosure and may include more or fewer components than shown, or combinations of the components, or different arrangements for the components.

In the system architecture shown in FIG. 1, the proxy node can invoke a stored data deduplication program and cooperate with the serving nodes to perform the method for data deduplication.

Based on the above system architecture, various embodiments of the method for data deduplication of the present disclosure are proposed.

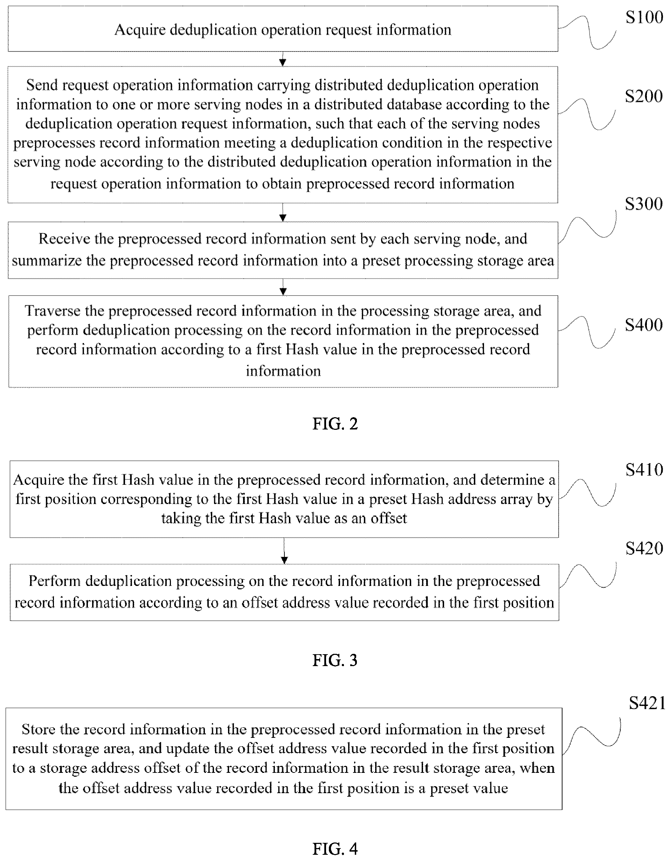

FIG. 2 depicts a flowchart showing a data deduplication method according to an embodiment of the present disclosure. The data deduplication method is performed by a proxy node in a distributed database. The data deduplication method includes, but is not limited to, S100, S200, S300 and S400.

At S100, deduplication operation request information is acquired.

In an embodiment, the deduplication operation request information may be generated by a user through a client, or may be request information from a network side, the embodiment is not limited thereto. When acquiring the deduplication operation request information, the proxy node cooperates with the serving nodes in the distributed database to perform data deduplication processing in subsequent operations.

At S200, request operation information carrying distributed deduplication operation information is sent to one or more serving nodes in the distributed database according to the deduplication operation request information, such that each of the serving nodes preprocesses record information meeting a deduplication condition in the respective serving node according to the distributed deduplication operation information in the request operation information, to obtain preprocessed record information.

It is worth noting that the preprocessed record information includes the record information and a first Hash value generated by the performance of the Hash calculation on the record information.

In an embodiment, after acquiring the deduplication operation request information, the proxy node reconstructs the deduplication operation request information to obtain request operation information carrying distributed deduplication operation information. Then, the proxy node distributes the request operation information carrying the distributed deduplication operation information to each serving node in the distributed database, such that each serving node preprocesses respective record information meeting a deduplication condition according to the distributed deduplication operation information in the request operation information to obtain preprocessed record information. The preprocessing to the record information by the serving node, includes the performance of the Hash calculation on the record information and the combination of the calculated first Hash value with the record information to form preprocessed record information. Therefore, in this embodiment, the parallel computing capability of the distributed database can be fully utilized to quickly obtain the preprocessed record information including the first Hash value and the record information, thereby facilitating the proxy node to directly perform deduplication processing in the subsequent operations with the preprocessed record information.

It is worth noting that the record information meeting the deduplication condition is the record information within a data range specified by the distributed deduplication operation information. For example, a data range may be specified in the distributed deduplication operation information, and in this case, all the record information within the data range may be considered as meeting the deduplication condition.

At 5300, the preprocessed record information sent by each serving node is received, and the preprocessed record information is summarized to a preset processing storage area.

In an embodiment, after each serving node completes preprocessing the record information meeting the deduplication condition and obtains corresponding preprocessed record information, the proxy node receives and summarizes the preprocessed record information sent by each serving node, and stores all the preprocessed record information in the preset processing storage area, such that the proxy node performs deduplication processing on the record information in the preprocessed record information in the subsequent operations with the processing storage area.

At S400, the preprocessed record information in the processing storage area is traversed, and deduplication processing is performed on the record information in the preprocessed record information according to the first Hash value in the preprocessed record information.

In an embodiment, after summarizing the preprocessed record information from each serving node into the processing storage area, the proxy node traverses the preprocessed record information in the processing storage area. During the traversing of the preprocessed record information, the proxy node performs deduplication processing on the record information in the preprocessed record information according to the first Hash value in the preprocessed record information.

In an embodiment, deduplication processing may be performed on the record information in different ways, sand this embodiment is not limited thereto. For example, duplicated record information in all the record information may be deduplicated. For another example, record information duplicated with a certain piece of record information in all the record information may be deduplicated. and For yet another example, the record information including a certain piece of local field information in all the record information may be deduplicated.

In an embodiment, by means of the data method for deduplication including the S100, S200, S300 and S400, the proxy node when acquiring deduplication operation request information, first reconstructs the deduplication operation request information into request operation information carrying distributed deduplication operation information, then sends the request operation information carrying the distributed deduplication operation information to each serving node in a distributed database. As such, each serving node performs a Hash calculation on record information meeting a deduplication condition in the respective serving node according to the distributed deduplication operation information, and combines the obtained first Hash value with the record information to form preprocessed record information. Therefore, the preprocessed record information received by the proxy node carries the result of the Hash calculation result, thereby eliminating the performance of the Hash calculation on the record information by the proxy node. Thus, after receiving the preprocessed record information, the proxy node immediately performs deduplication processing on the preprocessed record information. Therefore, according to this embodiment, the parallel computing capability of the distributed database can be fully utilized to quickly obtain full result set data containing results of the Hash calculation, thus improving the efficiency of deduplication processing by means of the distributed database.

In an embodiment, referring to FIG. 3, the performance of the deduplication processing on the record information in the preprocessed record information according to the first Hash value in the preprocessed record information in S400 includes, but not is limited to, the following operations S410 to S420.

At S410, the first Hash value in the preprocessed record information is acquired, and a first position corresponding to the first Hash value in a preset Hash address array is determined by taking the first Hash value as an offset.

At S420, deduplication processing is performed on the record information in the preprocessed record information according to an offset address value recorded in the first position.

It is worth noting that the Hash address array includes an offset address item which records offset address values, and the first position is a position in the offset address item.

It can be understood by those having ordinary skills in the art that the Hash calculation is a process of transforming input information of any length into output information of a fixed length through the Hash algorithm. The Hash calculation has the verification feature that the output information is definitely the same if the input information is the same, and the input information is definitely different if the output information is different. In addition, Hash conflict may occur in the Hash calculation, that is, the output information is the same but the input information is not necessarily the same. Therefore, based on the verification feature of the hash calculation, data deduplication processing can be performed by means of the Hash calculation.

In an embodiment, after summarizing the preprocessed record information from each serving node into the processing storage area, the proxy node reads the preprocessed record information piece by piece from the processing storage area to acquire a first Hash value in the preprocessed record information and determine a first position corresponding to the first Hash value in the offset address item of the hash address array, by means of the first Hash value as an offset. Then, the proxy node acquires an offset address value recorded in the first position in the offset address item, so that deduplication processing can be performed on the record information in the preprocessed record information according to the offset address value. Since the proxy node can directly acquire the record information and the first Hash value which correspond to each other by means of the preprocessed record information, the proxy node can directly perform deduplication processing on the record information by means of the first Hash value, thus avoiding time consumption caused by performing a Hash calculation on the record information one by one, and improving the efficiency of deduplication processing.

In an embodiment, deduplication processing may be performed on the record information in the preprocessed record information according to the offset address value in different ways, and this embodiment is not limited thereto. For example, the offset address value recorded in the offset address item may be an address offset of a storage position of the record information in the result storage area. When the record information is found in the corresponding storage position in the result storage area according to the offset address value, and the current record information is identical to the found record information, it is indicated that the current record information is duplicated with the found record information. Therefore, the current record information can be deduplicated by deleting the current record information. For another example, the offset address value recorded in the offset address item may be the first Hash value corresponding to the record information stored in the result storage area. If the first Hash value of the current record information is identical to the offset address value, and the current record information is the same as the record information stored in the result storage area corresponding to the offset address value, it is indicated that the current record information is duplicated with the record information stored in the result storage area corresponding to the offset address value. Thus, the current record information can be deduplicated by deleting the current record information.

In addition, in an embodiment, referring to FIG. 4, S420 includes, but is not limited to, the following operation S421.

At S421, when the offset address value recorded in the first position is a preset value, the record information in the preprocessed record information is stored in the preset result storage area, and the offset address value recorded in the first position is updated to a storage address offset of the record information in the result storage area.

In an embodiment, after the offset address value recorded in the corresponding first position is acquired from the Hash address array by taking the first Hash value in the preprocessed record information as an offset, a determination is performed as to whether the offset address value is the preset value. If the offset address value is the preset value, it is indicated that the position in the result storage area with the first Hash value as the address offset is not occupied by the record information, that is, the record information in the current preprocessed record information is not duplicated with any previous record information stored in the result storage area. Therefore, the record information can be stored in the position in the result storage area with the first Hash value as the address offset to complete the processing of the current preprocessed record information. It is worth noting that after the record information in the current preprocessed record information is stored in the position in the result storage area with the first Hash value as the address offset, the offset address value recorded in the first position in the offset address item is to be updated to the storage address offset for the record information recorded in the result storage area, so that deduplication processing can be performed on other preprocessed record information in the subsequent operations.

In an embodiment, the preset value has a different value range than the storage space in the result storage area. For example, the intersection of the value range of the preset value and the value range of the storage space in the result storage area is zero, which can reduce errors when determining whether the record information in the current preprocessed record information is duplicated with the record information in the result storage area by means of the Hash address array, thereby improving the accuracy of deduplication processing.

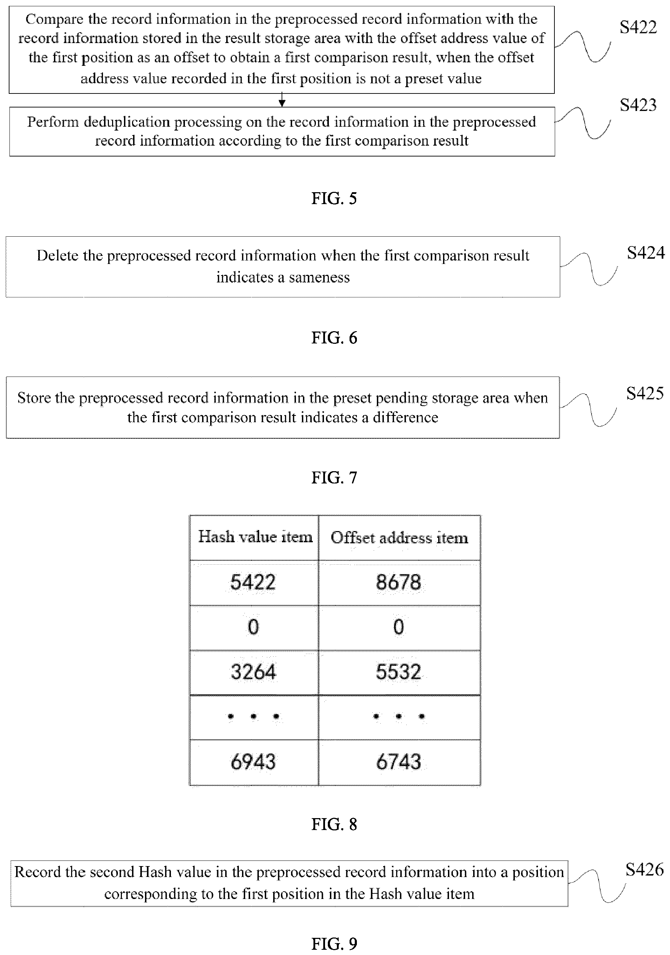

In an embodiment, referring to FIG. 5, S420 further includes, but is not limited to, the following operations S422 to S423.

At S422, when the offset address value recorded in the first position is not a preset value, the record information in the preprocessed record information is compared with the record information stored in the result storage area with the offset address value of the first position as an offset to obtain a first comparison result.

At S423, deduplication processing is performed on the record information in the preprocessed record information according to the first comparison result.

In an embodiment, when the offset address value recorded in the first position is not a preset value, it is indicated that the position in the result storage area with the first Hash value as the address offset has been occupied by the record information, and the first Hash value may have a Hash conflict or the record information in the current preprocessed record information is duplicated with the previous record information stored in the position in the result storage area with the first Hash value as the address offset. Therefore, the record information in the current preprocessed record information is compared with the record information stored in the result storage area with the offset address value of the first position as the offset to obtain a first comparison result. Then a determination is made as to whether the record information is duplicated or the first Hash value has a Hash conflict according to the first comparison result. Thus, proper deduplication processing can be performed on the record information in the preprocessed record information to improve the accuracy of deduplication processing. In addition, the record information stored in the result storage area can be located quickly and accurately by means of the offset address value, which can avoid the overhead caused by traversing the result storage area from the beginning, and therefore the efficiency of deduplication processing can also be improved.

In an embodiment, referring to FIG. 6, S423 includes, but is not limited to, the following operation S424.

At S424, when the first comparison result indicates the same record information, the preprocessed record information is deleted.

In an embodiment, after acquiring the first comparison result between the record information in the current preprocessed record information and the record information stored in the result storage area with the offset address value of the first position as the offset, if the first comparison result indicates the same record information, it means that the record information in the current preprocessed record information is duplicated with the previous record information stored in the position in the result storage area with the first hash value as the address offset. Therefore, the preprocessed record information in the processing storage area should be deleted, to realize deduplication of the preprocessed record information.

In an embodiment, referring to FIG. 7, S423 further includes, but is not limited to, the following operation S425.

At S425, when the first comparison result indicates different record information, the preprocessed record information is stored in the preset pending storage area.

In an embodiment, after acquiring the first comparison result between the record information in the current preprocessed record information and the record information stored in the result storage area with the offset address value of the first position as the offset, if the first comparison result indicates different record information, it means that the record information in the current preprocessed record information is not duplicated with the previous record information stored in the position in the result storage area with the first Hash value as the address offset, but the first Hash value has a Hash conflict. In addition, because the position in the result storage area with the first Hash value as the address offset has been occupied by the previous record information, the preprocessed record information can be stored in the pending storage area for a subsequent round of deduplication processing.

In addition, in an embodiment, the preprocessed record information further includes a second Hash value obtained by performing a Hash calculation on the record information in the preprocessed record information. In addition, referring to FIG. 8, the Hash address array further includes a Hash value item which has a length corresponding to the length of the offset address item. It is worth noting that the first Hash value and the second Hash value are obtained by performing two different Hash calculations on the record information, respectively. In this case, referring to FIG. 9, after S421 the method further includes, but is not limited to, the following operation S426.

At S426, the second Hash value in the preprocessed record information is recorded into a position corresponding to the first position in the Hash value item.

In an embodiment, after the offset address value recorded in the first position is updated to the storage address offset of the record information in the result storage area, the second Hash value in the preprocessed record information can be recorded in the position corresponding to the first position in the Hash value item. Therefore, the second Hash value stored in the Hash value item may be further compared with the second Hash value in the preprocessed record information in subsequent operations. In this embodiment, two different Hash calculations are adopted, and the two Hash values are compared and determined respectively in the subsequent operations, so that the probability of occurrence of the hash conflict can be reduced, and thus the efficiency and accuracy of deduplication processing can be improved.

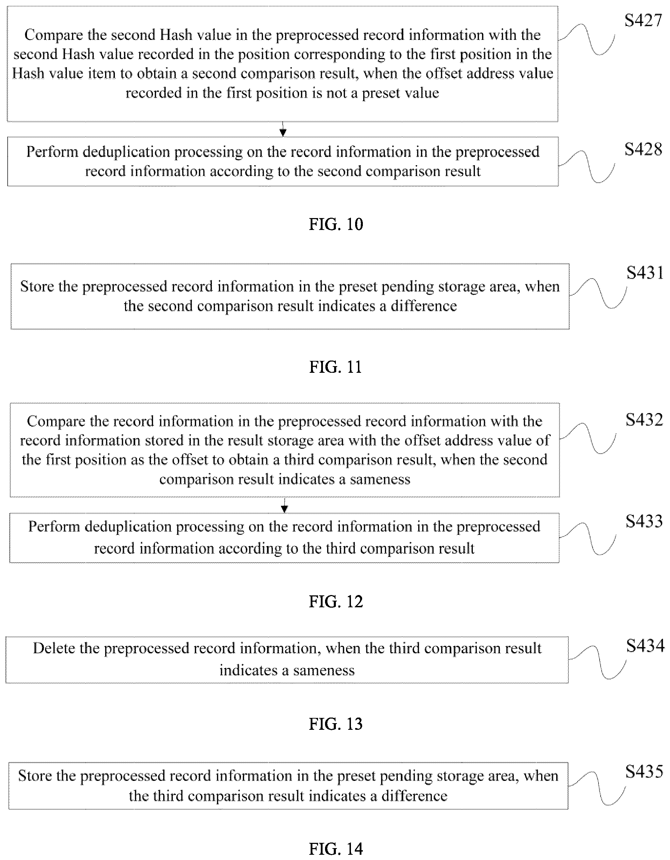

In an embodiment, referring to FIG. 10, S420 further includes, but is not limited to, the following operations S427 to S428, in addition to S426.

At S427, when the offset address value recorded in the first position is not a preset value, the second Hash value in the preprocessed record information is compared with the second Hash value recorded in the position corresponding to the first position in the Hash value item to obtain a second comparison result.

At S428, deduplication processing is performed on the record information in the preprocessed record information according to the second comparison result.

In an embodiment, when the offset address value recorded in the first position is not a preset value, it means that the position in the result storage area with the first Hash value as the address offset has been occupied by the record information, and the second Hash value may have a Hash conflict or the record information in the current preprocessed record information is duplicated with the previous record information stored in the position in the result storage area with the first Hash value as the address offset. In this case, the second Hash value in the preprocessed record information is compared with the second Hash value recorded in the position corresponding to the first position in the Hash value item to obtain a second comparison result, and deduplication processing is performed on the record information in the preprocessed record information according to the second comparison result. Because the second Hash value in the preprocessed record information is compared with the second Hash value recorded in the position corresponding to the first position in the Hash value item, a determination can be directly made as to whether the second Hash value has a Hash conflict or the record information is duplicated according to the verification feature of the Hash calculation without acquiring the record information stored in the result storage area before comparison, so that the efficiency of deduplication processing can be improved.

In an embodiment, referring to FIG. 11, S428 includes, but is not limited to, the following operation S431.

At S431, when the second comparison result indicates different second Hash values, the preprocessed record information is stored in the preset pending storage area.

In an embodiment, after acquiring the second comparison result between the second Hash value in the current preprocessed record information and the second Hash value recorded in the position corresponding to the first position in the Hash value item, if the second comparison result indicates different second Hash values, it is determined that the first Hash value has a Hash conflict in the process of addressing in the offset address item by means of the first Hash value according to the verification feature of the hash calculation. That is, the record information in the current preprocessed record information is not duplicated with the previous record information stored in the result storage area with the first hash value as the address offset. In this embodiment, the first Hash value is utilized to perform deduplication processing, on this basis, the second Hash value in the current preprocessed record information is compared with the second Hash value recorded in the position corresponding to the first position in the Hash value item. By performing the two Hash value comparisons, the probability of occurrence of the hash conflict can be reduced, thereby improving the efficiency of deduplication processing.

It is worth noting that although it is determined that the record information in the current preprocessed record information is not duplicated with the previous record information stored in the result storage area according to the second comparison result, because the position in the result storage area with the first Hash value as the address offset has been occupied by the previous record information, the preprocessed record information can be stored in the pending storage area for a subsequent round of deduplication processing.

In an embodiment, referring to FIG. 12, S428 further includes, but is not limited to, the following operations S432 and S433.

At S432, when the second comparison result indicates the same second Hash value, the record information in the preprocessed record information is compared with the record information stored in the result storage area with the offset address value of the first position as the offset to obtain a third comparison result.

At S433, deduplication processing is performed on the record information in the preprocessed record information according to the third comparison result.

In an embodiment, after acquiring the second comparison result between the second Hash value in the current preprocessed record information and the second Hash value recorded in the position corresponding to the first position in the Hash value item, if the second comparison result indicates the same second Hash value, it means that the second Hash value may have a hash conflict or the record information in the current preprocessed record information is duplicated with the previous record information stored in the position in the result storage area with the first Hash value as the address offset. Therefore, the record information in the current preprocessed record information is compared with the record information stored in the result storage area with the offset address value of the first position as the offset to obtain a third comparison result. And a determination is made as to whether the record information is duplicated or the second Hash value has a Hash conflict according to the third comparison result. Thus, proper deduplication processing can be performed on the record information in the preprocessed record information to improve the accuracy of deduplication processing.

In an embodiment, referring to FIG. 13, S433 includes, but is not limited to, the following operation S434.

At S434, when the third comparison result indicates the same record information, the preprocessed record information is deleted.

In an embodiment, after acquiring the third comparison result between the record information in the current preprocessed record information and the record information stored in the result storage area with the offset address value of the first position as the offset, if the third comparison result indicates the same record information, it means that the record information in the current preprocessed record information is duplicated with the previous record information stored in the result storage area with the first Hash value as the address offset. Therefore, the preprocessed record information in the processing storage area is to be deleted, to realize deduplication of the preprocessed record information.

In an embodiment, referring to FIG. 14, S433 further includes, but is not limited to, the following operation S435.

At S435, when the third comparison result indicates different record information, the preprocessed record information is stored in the preset pending storage area.

In an embodiment, after acquiring the third comparison result between the record information in the current preprocessed record information and the record information stored in the result storage area with the offset address value of the first position as the offset, if the third comparison result indicates different record information, it means that the record information in the current preprocessed record information is not duplicated with the previous record information stored in the result storage area with the first Hash value as the address offset, but the first Hash value has a Hash conflict. In addition, because the position in the result storage area with the first Hash value as the address offset has been occupied by the previous record information, the preprocessed record information can be stored in the pending storage area for a subsequent round of deduplication processing.

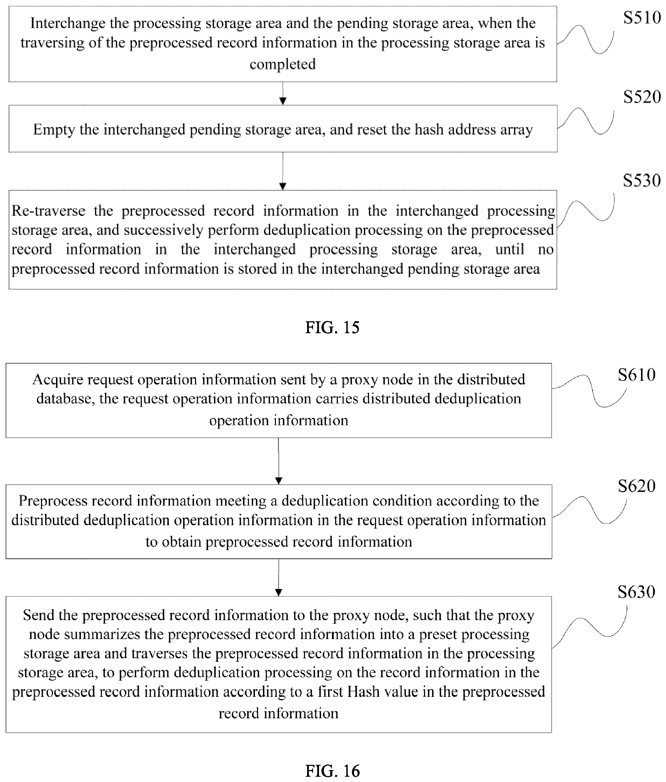

In an embodiment, referring to FIG. 15, the method for data deduplication further includes, but is not limited to, the following operations S510 to S530.

At S510, after the preprocessed record information in the processing storage area is traversed, the processing storage area and the pending storage area are interchanged.

At S520, the interchanged pending storage area is emptied, and the hash address array is reset.

At S530, the preprocessed record information in the interchanged processing storage area is re-traversed, and successive deduplication processing is performed on the preprocessed record information in the interchanged processing storage area, until no preprocessed record information is stored in the interchanged pending storage area.

In an embodiment, after the preprocessed record information in the processing storage area is traversed, that is, the record information in the processing storage area has been subjected to a round of deduplication processing, some new record information appearing for the first time is stored in the result storage area, and the preprocessed record information corresponding to the record information that cannot be stored in the result storage area in a previous round of deduplication processing due to a space limit of the offset address item, is stored in the pending storage area. It is worth noting that since the preprocessed record information stored in the pending storage area is not compared with one another, there may be duplicated record information. Therefore, the processing storage area and the pending storage area can be interchanged to convert the processing storage area into a new pending storage area, and convert the pending storage area into a new processing storage area, the new pending storage area can be emptied, and the Hash address array can be reset, such that the remaining preprocessed record information (that is, the preprocessed record information stored in the new processing storage area) can be regarded as a data set that has not been deduplicated. Thus, the preprocessed record information in the new processing storage area can be re-traversed to perform a new round of deduplication processing on the preprocessed record information in the new processing storage area. Because in each round of deduplication processing, part of the record information can be deduplicated and the preprocessed record information stored in the new pending storage area can be gradually decreased. After several rounds of deduplication processing until no preprocessed record information is stored in the new pending storage area, it indicates that all record information has been deduplicated, thus realizing the deduplication processing by means of the distributed database.

In an embodiment, by means of the several rounds of deduplication processing, the Hash address array can be prevented from storing excessive offset address values corresponding to the record information, and an association between the number of pieces of record information and the occupation of memory space can be relieved, so that the problem of occupying considerable memory resources due to a large amount of data can be prevented. Meanwhile, because the Hash address array stores offset address values, a considerable number of final results can be obtained in each round of deduplication processing, thus enabling full utilization of the parallel computing capability of the distributed database to meet the deduplication requirements of different levels of data with limited memory consumption.

In addition, another embodiment of the present disclosure further provides a method for data deduplication. As shown in FIG. 16, the method is performed by a serving node in a distributed database. The method includes, but is not limited to, the following operations S610 to 5630.

At S610, request operation information sent by a proxy node in the distributed database is acquired, where the request operation information carries distributed deduplication operation information.

At S620, record information meeting a deduplication condition is preprocessed according to the distributed deduplication operation information in the request operation information to obtain preprocessed record information.

At S630, the preprocessed record information is sent to the proxy node, such that the proxy node summarizes the preprocessed record information into a preset processing storage area and traverses the preprocessed record information in the processing storage area, to perform deduplication processing on the record information in the preprocessed record information according to a first Hash value in the preprocessed record information.

In an embodiment, the preprocessed record information includes the record information and the first Hash value obtained by performing a Hash calculation on the record information.

In an embodiment, after acquiring the request operation information carrying distributed deduplication operation information sent by the proxy node, the serving node preprocesses record information meeting a deduplication condition in the serving node according to the distributed deduplication operation information in the request operation information to obtain preprocessed record information. The preprocessing to the record information, by the serving node includes performing a Hash calculation on the record information and combining the calculated first hash value with the record information to form preprocessed record information. After the preprocessing all the record information meeting the deduplication condition in the serving node to obtain a corresponding preprocessed record information set, the serving node sends the preprocessed record information set to the proxy node, such that the proxy node can summarize the preprocessed record information into the preset processing storage area and traverse the preprocessed record information in the processing storage area in subsequent operations. Thus, the proxy node can perform deduplication processing on the record information in the preprocessed record information according to the first Hash value in the preprocessed record information during the traverse of the preprocessed record information. Therefore, in this embodiment, the parallel computing capability of the distributed database can be fully utilized to quickly obtain the preprocessed record information including the first Hash value and the record information, thereby facilitating the proxy node to directly utilize the preprocessed record information to perform deduplication processing in the subsequent operations.

It is worth noting that the record information meeting the deduplication condition is record information within a data range specified by the distributed deduplication operation information. For example, a data range may be specified in the distributed deduplication operation information, and in this case, all the record information within the data range may be considered as meeting the deduplication condition.

In an embodiment, deduplication processing may be performed on the record information in different manners, which will not be specifically limited in this embodiment. For example, duplicated record information in all the record information may be deduplicated; for another example, record information duplicated with a certain piece of record information in all the record information may be deduplicated; and for yet another example, the record information including a certain piece of local field information in all the record information may be deduplicated.

In an embodiment, by means of the method for data deduplication including the operations S610, S620 and S630, after acquiring the request operation information carrying the distributed deduplication operation information sent by the proxy node, the serving node preprocesses the record information meeting a deduplication condition in the serving node according to the distributed deduplication operation information in the request operation information to obtain preprocessed record information, and then summarizes the preprocessed record information into the proxy node. Because the preprocessed record information is formed by combining the record information, and the first Hash value obtained by performing a Hash calculation on the record information, the preprocessed record information received by the proxy node already carries a Hash calculation result, thereby eliminating the process of performing a Hash calculation on the record information by the proxy node. Thus, after receiving the preprocessed record information, the proxy node can immediately perform deduplication processing on the preprocessed record information. Therefore, in this embodiment, the parallel computing capability of the distributed database can be fully utilized to quickly obtain the full result set data containing Hash calculation results, s thus improving the efficiency of deduplication processing by means of the distributed database.

In an embodiment, the preprocessed record information further includes a second Hash value obtained by performing a Hash calculation on the record information in the preprocessed record information. Therefore, after the serving node sends the preprocessed record information to the proxy node, the proxy node can perform deduplication processing on the record information in the preprocessed record information according to the first Hash value and the second Hash value in the preprocessed record information. By performing deduplication processing with both Hash values, the probability of occurrence of the Hash conflict can be reduced in the process of performing deduplication processing by the proxy node, thus improving the efficiency of deduplication processing.

In addition, an embodiment of the present disclosure further provides a node. The node includes a memory, a processor and a computer program stored in the memory and executable by the processor.

The processor and the memory may be connected by a bus or in other ways.

As a non-transitory computer-readable storage medium, the memory may be configured to store non-transitory software programs and non-transitory computer-executable programs. In addition, the memory may include a high-speed random-access memory, and may also include a non-transitory memory, such as at least one magnetic disk storage device, a flash memory device, or other non-transitory solid state storage device. In some implementations, the memory may include memories remotely located with respect to the processor, and these remote memories may be connected to the processor through networks. Examples of the above networks include, but are not limited to, the Internet, an intranet, a local area network, a mobile communication network and combinations thereof.

It should be noted that the node in this embodiment can act as the proxy node or serving node in the embodiment shown in FIG. 1, and can form a part of the system architecture in the embodiment shown in FIG. 1. These embodiments all belong to the same inventive concept, and therefore have the same implementation principles and technical effects, which will not be described in detail here.

Non-transitory software programs and instructions required to realize the method for data deduplication in the above-mentioned embodiments are stored in the memory which, when executed by the processor, cause the processor to perform the method for data deduplication performed by the proxy node in the above-mentioned embodiment, for example, perform the above-described S100 to S400 in FIG. 2, S410 to S420 in FIG. 3, S421 in FIG. 4, S422 to S423 in FIG. 5, S424 in FIG. 6, S425 in FIG. 7, S426 in FIG. 9, S427 to S428 in FIG. 10, S431 in FIG. 11, S432 to S433 in FIG. 12, S434 in FIG. 13, S435 in FIG.14, and S510 to S530 in FIG. 15; or perform the method for data deduplication performed by the serving node in the above-mentioned embodiments, for example, perform the above-described S610 to S630 in FIG. 16.

The device embodiments described above are merely illustrative, and the units described as separate components may or may not be physically separated, that is, they may be located in one place, or may be distributed onto several network elements. Some or all of the modules may be selected according to actual needs to achieve the purpose of this embodiment.

In addition, an embodiment of the present disclosure further provides a computer-readable storage medium storing a computer-executable instruction which, when executed by a processor or controller, for example, by a processor in the above-mentioned node embodiment, may cause the above-mentioned processor to perform the method for data deduplication performed by the proxy node in the above-mentioned embodiments, for example, perform the above-described S100 to S400 in FIG. 2, S410 to S420 in FIG. 3, S421 in FIG. 4, S422 to S423 in FIG. 5, S424 in FIG. 6, S425 in FIG. 7, S426 in FIG. 9, S427 to S428 in FIG. 10, S431 in FIG. 11, S432 to S433 in FIG. 12, S434 in FIG.13, S435 in FIG.14, and S510 to S530 in FIG. 15; or may cause the processor to perform the method for data deduplication performed by o the serving node in the above- described embodiments, for example, perform the above-described S610 to S630 in FIG. 16.

An embodiment of the present disclosure include: acquiring deduplication operation request information; sending request operation information carrying distributed deduplication operation information to a serving node in a distributed database according to the deduplication operation request information, such that the serving node preprocesses record information meeting a deduplication condition in the serving node according to the distributed deduplication operation information in the request operation information to obtain preprocessed record information, where the preprocessed record information includes the record information and a first Hash value obtained by performing a Hash calculation on the record information; receiving the preprocessed record information sent by the serving node, and summarizing the preprocessed record information into a preset processing storage area; and traversing the preprocessed record information in the processing storage area, and performing deduplication processing on the record information in the preprocessed record information according to the first Hash value in the preprocessed record information. According to the embodiment of the present disclosure, a proxy node sends request operation information carrying distributed deduplication operation information to each serving node, such that each serving node can perform a Hash calculation on respective record information meeting a deduplication condition according to the distributed deduplication operation information, and combine an obtained first Hash value with the record information to form the preprocessed record information. Therefore, the preprocessed record information received by the proxy node already carries a Hash calculation result, thereby eliminating the process of performing a Hash calculation on the record information by the proxy node. Thus, after receiving the preprocessed record information, the proxy node can immediately perform deduplication processing on the preprocessed record information. Therefore, according to the scheme of the embodiment of the present disclosure, the parallel computing capability of the distributed database can be fully utilized to quickly obtain full result set data containing Hash calculation results, so that the efficiency of deduplication processing can be improved by means of the distributed database.

As will be understood by those having ordinary skills in the art that all or some of the steps, and systems in the method disclosed above may be implemented as software, firmware, hardware and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on a computer-readable medium, and the computer-readable medium may include a computer storage medium (or a non-transitory medium) and a communication medium (or a transitory medium). As is well known to those having ordinary skills in the art, the term computer storage medium includes volatile and nonvolatile, removable and non-removable media implemented in any method or technology for storing information such as computer-readable instructions, data structures, program modules or other data. A computer storage medium may include RAM, ROM, EEPROM, flash memory or other memory technologies, CD-ROM, digital versatile disk (DVD) or other optical disk storage, magnetic cassette, magnetic tape, magnetic disk storage or other magnetic storage devices, or any other media that can be used to store desired information and can be accessed by a computer. In addition, it is well known to those having ordinary skills in the art that the communication medium may generally include computer readable instructions, data structures, program modules or other data in a modulated data signal such as a carrier wave or other transmission mechanism, and may include any information delivery medium.

Described above are some embodiments of the present disclosure, but the present disclosure is not limited thereto the above embodiments.

## Claims

1. A method for data deduplication, which is performed by a proxy node in a distributed database, comprising,
acquiring deduplication operation request information (S100);
sending request operation information carrying distributed deduplication operation information to each of at least one serving node in the distributed database according to the deduplication operation request information, such that the respective serving node preprocesses each record information meeting a deduplication condition in the respective serving node according to the distributed deduplication operation information in the request operation information, to obtain preprocessed record information for each record information (S200), wherein the preprocessed record information comprises the record information and a first Hash value generated from a Hash calculation on the record information;
receiving the preprocessed record information sent by each of the at least one serving node, and summarizing the preprocessed record information into a preset processing storage area (S300); and
traversing the preprocessed record information in the processing storage area, and for each preprocessed record information, performing deduplication processing on the record information in the preprocessed record information according to the first Hash value in the preprocessed record information (S400).

2. The method of claim 1, wherein performing deduplication processing on the record information in the preprocessed record information according to the first Hash value in the preprocessed record information comprises,
acquiring the first Hash value in the preprocessed record information, and determining a first position corresponding to the first Hash value in a preset Hash address array by means of the first Hash value as an offset (S410), wherein the Hash address array comprises an offset address item, the offset address item records an offset address value, and the first position is a position stored in the offset address item; and
performing deduplication processing on the record information in the preprocessed record information according to the offset address value recorded in the first position (S420).

3. The method of claim 2, wherein performing deduplication processing on the record information in the preprocessed record information according to the offset address value recorded in the first position (S420) comprises,
in response to the offset address value recorded in the first position being a preset value, storing the record information in the preprocessed record information in a preset result storage area, and updating the offset address value recorded in the first position to a storage address offset of the record information in the result storage area (S421), wherein the result storage area is configured to store record information which is deduplicated.

4. The method of claim 3, wherein performing deduplication processing on the record information in the preprocessed record information according to the offset address value recorded in the first position (S420) further comprises,
in response to the offset address value recorded in the first position being a non-preset value, comparing the record information in the preprocessed record information with the record information stored in the result storage area with the offset address value of the first position as an offset to obtain a first comparison result (S422); and
performing deduplication processing on the record information in the preprocessed record information according to the first comparison result (S423).

5. The method of claim 4, wherein performing deduplication processing on the record information in the preprocessed record information according to the first comparison result (S423) comprises,
in response to the first comparison result indicating a sameness, deleting the preprocessed record information (S424); or
in response to the first comparison result indicating a difference, storing the preprocessed record information in a preset pending storage area (S425).

6. The method of claim 3, wherein the preprocessed record information further comprises a second Hash value generated from another Hash calculation on the record information in the preprocessed record information, and the Hash address array further comprises a Hash value item having a length corresponds to a length of the offset address item; and
wherein performing deduplication processing on the record information in the preprocessed record information according to the offset address value recorded in the first position (S420) further comprises,
recording the second Hash value in the preprocessed record information to a position corresponding to the first position, in the Hash value item (S426).

7. The method of claim 6, wherein performing deduplication processing on the record information in the preprocessed record information according to the offset address value recorded in the first position (S420) further comprises,
in response to the offset address value recorded in the first position being a non-preset value, comparing the second Hash value in the preprocessed record information with the second Hash value recorded in the position corresponding to the first position in the Hash value item, to obtain a second comparison result (S427); and
performing deduplication processing on the record information in the preprocessed record information according to the second comparison result (S428).

8. The method of claim 7, wherein performing deduplication processing on the record information in the preprocessed record information according to the second comparison result (S428) comprises,
in response to the second comparison result indicating a difference, storing the preprocessed record information in a preset pending storage area (S431); or
in response to the second comparison result indicating a sameness, comparing the record information in the preprocessed record information with the record information stored in the result storage area with the offset address value of the first position as the offset, to obtain a third comparison result (S432); and performing deduplication processing on the record information in the preprocessed record information according to the third comparison result (S433).

9. The method of claim 8, wherein performing deduplication processing on the record information in the preprocessed record information according to the third comparison result (S431) comprises,
in response to the third comparison result indicating a sameness, deleting the preprocessed record information (S434); or
in response to the third comparison result indicating a difference, storing the preprocessed record information in a preset pending storage area (S435).

10. The data deduplication method of any one of claim 5, 8 or 9, further comprising,
in response to a completion of the traversing of the preprocessed record information in the processing storage area, interchanging the processing storage area and the pending storage area (S510);
emptying the interchanged pending storage area, and resetting the Hash address array (S520); and
re-traversing the preprocessed record information in the interchanged processing storage area, and successively performing deduplication processing on the preprocessed record information in the interchanged processing storage area, until no preprocessed record information is stored in the interchanged pending storage area (S530).

11. The method of any one of claims 1 to 10, wherein the record information meeting the deduplication condition is record information within a data range specified by the distributed deduplication operation information.

12. A method for data deduplication, which is performed by a serving node in a distributed database, comprising,
acquiring request operation information sent by a proxy node in the distributed database, the request operation information carrying distributed deduplication operation information (S610);
preprocessing each record information meeting a deduplication condition according to the distributed deduplication operation information in the request operation information, to obtain preprocessed record information for each record information (S620), wherein the preprocessed record information comprises the record information and a first Hash value generated from a Hash calculation on the record information; and
sending the preprocessed record information to the proxy node, such that the proxy node summarizes the preprocessed record information into a preset processing storage area and traverses the preprocessed record information in the processing storage area, and for each preprocessed record information, performing deduplication processing on the record information in the preprocessed record information according to the first Hash value in the preprocessed record information (S630).

13. The method of claim 12, wherein the preprocessed record information further comprises a second Hash value generated from another Hash calculation on the record information in the preprocessed record information, and the preprocessed record information enables the proxy node to perform deduplication processing on the record information in the preprocessed record information according to the first Hash value and the second Hash value in the preprocessed record information.

14. The method of claim 12, wherein the record information meeting the deduplication condition is record information within a data range specified by the distributed deduplication operation information.

15. A computer-readable storage medium, storing a computer-executable instruction which, when executed by a processor, causes the processor to perform the method of any one of claims 1 to 11, or the method of any one of claims 12 to 14.

## Patentansprüche

1. Verfahren zur Datendeduplizierung, das durch einen Proxy-Knoten in einer verteilten Datenbank durchgeführt wird, umfassend
Erfassen einer Deduplizierungsvorgangsanforderungsinformation (S100);
Senden einer Anforderungsvorgangsinformation, die eine verteilte Deduplizierungsvorgangsinformation trägt, an jeden von mindestens einem bedienenden Knoten in der verteilten Datenbank gemäß der Deduplizierungsvorgangsanforderungsinformation, so dass der jeweilige bedienende Knoten jede Datensatzinformation, die eine Deduplizierungsbedingung in dem jeweiligen bedienenden Knoten erfüllt, gemäß der verteilten Deduplizierungsvorgangsinformation in der Anforderungsvorgangsinformation vorverarbeitet, um eine vorverarbeitete Datensatzinformation für jede Datensatzinformation zu erhalten (S200), wobei die vorverarbeitete Datensatzinformation die Datensatzinformation und einen ersten Hash-Wert umfasst, der aus einer Hash-Berechnung der Datensatzinformation erzeugt wird;
Empfangen der vorverarbeiteten Datensatzinformation, die von jedem der mindestens einen bedienenden Knoten gesendet wird, und Zusammenfassen der vorverarbeiteten Datensatzinformation in einem vorbestimmten Verarbeitungsspeicherbereich (S300); und
Durchlaufen der vorverarbeiteten Datensatzinformation in dem Verarbeitungsspeicherbereich, und für jede vorverarbeitete Datensatzinformation, Durchführen einer Deduplizierungsverarbeitung an der Datensatzinformation in der vorverarbeiteten Datensatzinformation gemäß dem ersten Hash-Wert in der vorverarbeiteten Datensatzinformation (S400).

2. Verfahren nach Anspruch 1, wobei das Durchführen der Deduplizierungsverarbeitung an der Datensatzinformation in der vorverarbeiteten Datensatzinformation gemäß dem ersten Hash-Wert in der vorverarbeiteten Datensatzinformation umfasst
Erfassen des ersten Hash-Werts in der vorverarbeiteten Datensatzinformation und Bestimmen einer ersten Position, die dem ersten Hash-Wert in einem vorbestimmten Hash-Adressenfeld entspricht, mittels des ersten Hash-Wertes als Offset (S410), wobei das Hash-Adressenfeld ein Offset-Adressenelement umfasst, das Offset-Adressenelement einen Offset-Adressenwert aufzeichnet und die erste Position eine in dem Offset-Adressenelement gespeicherte Position ist; und
Durchführen der Deduplizierungsverarbeitung an der Datensatzinformation in der vorverarbeiteten Datensatzinformation gemäß dem in der ersten Position aufgezeichneten Offset-Adressenwert (S420).

3. Verfahren nach Anspruch 2, wobei das Durchführen der Deduplizierungsverarbeitung an der Datensatzinformation in der vorverarbeiteten Datensatzinformation gemäß dem in der ersten Position aufgezeichneten Offset-Adressenwert (S420) umfasst
als Reaktion darauf, dass der in der ersten Position aufgezeichnete Offset-Adressenwert ein vorbestimmter Wert ist, Speichern der Datensatzinformation in der vorverarbeiteten Datensatzinformation in einem vorbestimmten Ergebnisspeicherbereich, und Aktualisieren des in der ersten Position aufgezeichneten Offset-Adressenwerts auf einen Speicheradressen-Offset der Datensatzinformation in dem Ergebnisspeicherbereich (S421), wobei der Ergebnisspeicherbereich dazu konfiguriert ist, Datensatzinformation zu speichern, die dedupliziert ist.

4. Verfahren nach Anspruch 3, wobei das Durchführen der Deduplizierungsverarbeitung an der Datensatzinformation in der vorverarbeiteten Datensatzinformation gemäß dem in der ersten Position aufgezeichneten Offset-Adressenwert (S420) ferner umfasst
als Reaktion darauf, dass der in der ersten Position aufgezeichnete Offset-Adressenwert ein nicht vorbestimmter Wert ist, Vergleichen der Datensatzinformation in der vorverarbeiteten Datensatzinformation mit der im Ergebnisspeicherbereich gespeicherten Datensatzinformation mit dem Offset-Adressenwert der ersten Position als Offset, um ein erstes Vergleichsergebnis zu erhalten (S422); und
Durchführen der Deduplizierungsverarbeitung an der Datensatzinformation in der vorverarbeiteten Datensatzinformation gemäß dem ersten Vergleichsergebnis (S423).

5. Verfahren nach Anspruch 4, wobei das Durchführen der Deduplizierungsverarbeitung an der Datensatzinformation in der vorverarbeiteten Datensatzinformation gemäß dem ersten Vergleichsergebnis (S423) umfasst
als Reaktion darauf, dass das erste Vergleichsergebnis eine Gleichheit anzeigt, Löschen der vorverarbeiteten Datensatzinformation (S424); oder
als Reaktion darauf, dass das erste Vergleichsergebnis einen Unterschied anzeigt, Speichern der vorverarbeiteten Datensatzinformation in einem vorbestimmten, ausstehenden Speicherbereich (S425).

6. Verfahren nach Anspruch 3, wobei die vorverarbeitete Datensatzinformation ferner einen zweiten Hash-Wert umfasst, der aus einer weiteren Hash-Berechnung der Datensatzinformation in der vorverarbeiteten Datensatzinformation erzeugt wird, und das Hash-Adressenfeld ferner ein Hash-Wert-Element mit einer Länge umfasst, die einer Länge des Offset-Adressenelements entspricht; und
wobei das Durchführen der Deduplizierungsverarbeitung an der Datensatzinformation in der vorverarbeiteten Datensatzinformation gemäß dem in der ersten Position aufgezeichneten Offset-Adressenwert (S420) ferner umfasst
Aufzeichnen des zweiten Hash-Werts in der vorverarbeiteten Datensatzinformation an einer Position, die der ersten Position entspricht, in dem Hash-Wert-Element (S426).

7. Verfahren nach Anspruch 6, wobei das Durchführen der Deduplizierungsverarbeitung an der Datensatzinformation in der vorverarbeiteten Datensatzinformation gemäß dem in der ersten Position aufgezeichneten Offset-Adressenwert (S420) ferner umfasst
als Reaktion darauf, dass der in der ersten Position aufgezeichnete Offset-Adressenwert ein nicht vorbestimmter Wert ist, Vergleichen des zweiten Hash-Werts in der vorverarbeiteten Datensatzinformation mit dem zweiten Hash-Wert, der in der Position aufgezeichnet ist, die der ersten Position in dem Hash-Wert-Element entspricht, um ein zweites Vergleichsergebnis zu erhalten (S427); und
Durchführen der Deduplizierungsverarbeitung an der Datensatzinformation in der vorverarbeiteten Datensatzinformation gemäß dem zweiten Vergleichsergebnis (S428).

8. Verfahren nach Anspruch 7, wobei das Durchführen der Deduplizierungsverarbeitung an der Datensatzinformation in der vorverarbeiteten Datensatzinformation gemäß dem zweiten Vergleichsergebnis (S428) umfasst
als Reaktion darauf, dass das zweite Vergleichsergebnis einen Unterschied anzeigt, Speichern der vorverarbeiteten Datensatzinformation in einem vorbestimmten, ausstehenden Speicherbereich (S431); oder
als Reaktion darauf, dass das zweite Vergleichsergebnis eine Gleichheit anzeigt, Vergleichen der Datensatzinformation in der vorverarbeiteten Datensatzinformation mit der Datensatzinformation, die in dem Ergebnisspeicherbereich mit dem Offset-Adressenwert der ersten Position als Offset gespeichert ist, um ein drittes Vergleichsergebnis zu erhalten (S432); und Durchführen einer Deduplizierungsverarbeitung an der Datensatzinformation in der vorverarbeiteten Datensatzinformation gemäß dem dritten Vergleichsergebnis (S433).

9. Verfahren nach Anspruch 8, wobei das Durchführen der Deduplizierungsverarbeitung an der Datensatzinformation in der vorverarbeiteten Datensatzinformation gemäß dem dritten Vergleichsergebnis (S431) umfasst
als Reaktion darauf, dass das dritte Vergleichsergebnis eine Gleichheit anzeigt, Löschen der vorverarbeiteten Datensatzinformation (S434); oder
als Reaktion darauf, dass das dritte Vergleichsergebnis einen Unterschied anzeigt, Speichern der vorverarbeiteten Datensatzinformation in einem vorbestimmten, ausstehenden Speicherbereich (S435).

10. Datendeduplizierungsverfahren nach einem der Ansprüche 5, 8 oder 9, ferner umfassend
als Reaktion auf den Abschluss des Durchlaufs der vorverarbeiteten Datensatzinformation im Verarbeitungsspeicherbereich, Austauschen des Verarbeitungsspeicherbereichs und des ausstehenden Speicherbereichs (S510);
Leeren des ausgetauschten ausstehenden Speicherbereichs und Zurücksetzen des Hash-Adressenfelds (S520); und
erneutes Durchlaufen der vorverarbeiteten Datensatzinformation in dem ausgetauschten Verarbeitungsspeicherbereich und sukzessives Durchführen einer Deduplizierungsverarbeitung an der vorverarbeiteten Datensatzinformation in dem ausgetauschten Verarbeitungsspeicherbereich, bis keine vorverarbeitete Datensatzinformation in dem ausgetauschten ausstehenden Speicherbereich gespeichert ist (S530).

11. Verfahren nach einem der Ansprüche 1 bis 10, wobei die Datensatzinformation, die die Deduplizierungsbedingung erfüllt, Datensatzinformation innerhalb eines Datenbereichs ist, der durch die verteilte Deduplizierungsvorgangsinformation spezifiziert ist.

12. Verfahren zur Datendeduplizierung, das durch einen bedienenden Knoten in einer verteilten Datenbank durchgeführt wird, umfassend
Erfassen einer Anforderungsvorgangsinformation, die von einem Proxy-Knoten in der verteilten Datenbank gesendet wird, wobei die Anforderungsvorgangsinformation verteilte Deduplizierungsvorgangsinformation trägt (S610);
Vorverarbeiten jeder Datensatzinformation, die eine Deduplizierungsbedingung erfüllt, gemäß der verteilten Deduplizierungsvorgangsinformation in der Anforderungsvorgangsinformation, um vorverarbeitete Datensatzinformation für jede Datensatzinformation zu erhalten (S620), wobei die vorverarbeitete Datensatzinformation die Datensatzinformation und einen ersten Hash-Wert umfasst, der aus einer Hash-Berechnung der Datensatzinformation erzeugt wird; und
Senden der vorverarbeiteten Datensatzinformation an den Proxy-Knoten, so dass der Proxy-Knoten die vorverarbeitete Datensatzinformation in einem vorbestimmten Verarbeitungsspeicherbereich zusammenfasst und die vorverarbeitete Datensatzinformation in dem Verarbeitungsspeicherbereich durchläuft, und für jede vorverarbeitete Datensatzinformation, Durchführen einer Deduplizierungsverarbeitung an der Datensatzinformation in der vorverarbeiteten Datensatzinformation gemäß dem ersten Hash-Wert in der vorverarbeiteten Datensatzinformation (S630).

13. Verfahren nach Anspruch 12, wobei die vorverarbeitete Datensatzinformation ferner einen zweiten Hash-Wert umfasst, der aus einer weiteren Hash-Berechnung der Datensatzinformation in der vorverarbeiteten Datensatzinformation erzeugt wird, und die vorverarbeitete Datensatzinformation den Proxy-Knoten in die Lage versetzt, eine Deduplizierungsverarbeitung der Datensatzinformation in der vorverarbeiteten Datensatzinformation gemäß dem ersten Hash-Wert und dem zweiten Hash-Wert in der vorverarbeiteten Datensatzinformation durchzuführen.

14. Verfahren nach Anspruch 12, wobei die Datensatzinformation, die die Deduplizierungsbedingung erfüllt, Datensatzinformation innerhalb eines Datenbereichs ist, der durch die verteilte Deduplizierungsvorgangsinformation spezifiziert ist.

15. Computerlesbares Speichermedium, das eine computerausführbare Anweisung speichert, die, wenn sie von einem Prozessor ausgeführt wird, den Prozessor dazu veranlasst, das Verfahren nach einem der Ansprüche 1 bis 11 oder das Verfahren nach einem der Ansprüche 12 bis 14 durchzuführen.

## Revendications

1. Procédé de déduplication de données, qui est réalisé par un noeud proxy dans une base de données distribuée, comprenant,
acquérir des informations de requête d'opération de déduplication (S100) ;
envoyer des informations d'opération de requête portant des informations d'opération de déduplication distribuée à chacun d'au moins un noeud de desserte dans la base de données distribuée selon les informations de requête d'opération de déduplication, de telle sorte que le noeud de desserte respectif prétraite chaque information d'enregistrement satisfaisant à une condition de déduplication dans le noeud de desserte respectif selon les informations d'opération de déduplication distribuée dans les informations d'opération de requête, pour obtenir des informations d'enregistrement prétraitées pour chaque information d'enregistrement (S200), dans lequel les informations d'enregistrement prétraitées comprennent les informations d'enregistrement et une première valeur de hachage générée à partir d'un calcul de hachage sur les informations d'enregistrement ;
recevoir les informations d'enregistrement prétraitées envoyées par chacun d'au moins un noeud de desserte, et résumer les informations d'enregistrement prétraitées dans une zone de stockage de traitement prédéfinie (S300) ; et
traverser les informations d'enregistrement prétraitées dans la zone de stockage de traitement, et pour chaque information d'enregistrement prétraitée, réaliser un traitement de déduplication sur les informations d'enregistrement dans les informations d'enregistrement prétraitées selon la première valeur de hachage dans les informations d'enregistrement prétraitées (S400).

2. Procédé selon la revendication 1, dans lequel la réalisation d'un traitement de déduplication sur les informations d'enregistrement dans les informations d'enregistrement prétraitées selon la première valeur de hachage dans les informations d'enregistrement prétraitées comprend,
acquérir la première valeur de hachage dans les informations d'enregistrement prétraitées, et déterminer une première position correspondant à la première valeur de hachage dans un tableau d'adresses de hachage prédéfini au moyen de la première valeur de hachage en tant que décalage (S410), dans lequel le tableau d'adresses de hachage comprend un élément d'adresse de décalage, l'élément d'adresse de décalage enregistre une valeur d'adresse de décalage, et la première position est une position stockée dans l'élément d'adresse de décalage ; et
réaliser un traitement de déduplication sur les informations d'enregistrement dans les informations d'enregistrement prétraitées selon la valeur d'adresse de décalage enregistrée dans la première position (S420).

3. Procédé selon la revendication 2, dans lequel la réalisation d'un traitement de déduplication sur les informations d'enregistrement dans les informations d'enregistrement prétraitées selon la valeur d'adresse de décalage enregistrée dans la première position (S420) comprend,
en réponse à la valeur d'adresse de décalage enregistrée dans la première position étant une valeur prédéfinie, stocker les informations d'enregistrement dans les informations d'enregistrement prétraitées dans une zone de stockage de résultat prédéfinie, et mettre à jour la valeur d'adresse de décalage enregistrée dans la première position à un décalage d'adresse de stockage des informations d'enregistrement dans la zone de stockage de résultat (S421), dans lequel la zone de stockage de résultat est configurée pour stocker des informations d'enregistrement qui sont dédupliquées.

4. Procédé selon la revendication 3, dans lequel la réalisation d'un traitement de déduplication sur les informations d'enregistrement dans les informations d'enregistrement prétraitées selon la valeur d'adresse de décalage enregistrée dans la première position (S420) comprend en outre,
en réponse à la valeur d'adresse de décalage enregistrée dans la première position étant une valeur non prédéfinie, comparer les informations d'enregistrement dans les informations d'enregistrement prétraitées avec les informations d'enregistrement stockées dans la zone de stockage de résultat avec la valeur d'adresse de décalage de la première position en tant que décalage pour obtenir un premier résultat de comparaison (S422) ; et
réaliser un traitement de déduplication sur les informations d'enregistrement dans les informations d'enregistrement prétraitées selon le premier résultat de comparaison (S423).

5. Procédé selon la revendication 4, dans lequel la réalisation d'un traitement de déduplication sur les informations d'enregistrement dans les informations d'enregistrement prétraitées selon le premier résultat de comparaison (S423) comprend,
en réponse au premier résultat de comparaison indiquant une similitude, supprimer les informations d'enregistrement prétraitées (S424) ; ou
en réponse au premier résultat de comparaison indiquant une différence, stocker les informations d'enregistrement prétraitées dans une zone de stockage en attente prédéfinie (S425).

6. Procédé selon la revendication 3, dans lequel les informations d'enregistrement prétraitées comprennent en outre une deuxième valeur de hachage générée à partir d'un autre calcul de hachage sur les informations d'enregistrement dans les informations d'enregistrement prétraitées, et le tableau d'adresses de hachage comprend en outre un élément de valeur de hachage ayant une longueur correspondant à une longueur de l'élément d'adresse de décalage ; et
dans lequel réaliser un traitement de déduplication sur les informations d'enregistrement dans les informations d'enregistrement prétraitées selon la valeur d'adresse de décalage enregistrée dans la première position (S420) comprend en outre,
enregistrer la deuxième valeur de hachage dans les informations d'enregistrement prétraitées à une position correspondant à la première position, dans l'élément de valeur de hachage (S426).

7. Procédé selon la revendication 6, dans lequel la réalisation d'un traitement de déduplication sur les informations d'enregistrement dans les informations d'enregistrement prétraitées selon la valeur d'adresse de décalage enregistrée dans la première position (S420) comprend en outre,
en réponse à la valeur d'adresse de décalage enregistrée dans la première position étant une valeur non prédéfinie, comparer la deuxième valeur de hachage dans les informations d'enregistrement prétraitées avec la deuxième valeur de hachage enregistrée dans la position correspondant à la première position dans l'élément de valeur de hachage, pour obtenir un deuxième résultat de comparaison (S427) ; et
réaliser un traitement de déduplication sur les informations d'enregistrement dans les informations d'enregistrement prétraitées selon le deuxième résultat de comparaison (S428).

8. Procédé selon la revendication 7, dans lequel la réalisation d'un traitement de déduplication sur les informations d'enregistrement dans les informations d'enregistrement prétraitées selon le deuxième résultat de comparaison (S428) comprend,
en réponse au deuxième résultat de comparaison indiquant une différence, stocker les informations d'enregistrement prétraitées dans une zone de stockage en attente prédéfinie (S431) ; ou
en réponse au deuxième résultat de comparaison indiquant une similitude, comparer les informations d'enregistrement dans les informations d'enregistrement prétraitées avec les informations d'enregistrement stockées dans la zone de stockage de résultat avec la valeur d'adresse de décalage de la première position en tant que décalage, pour obtenir un troisième résultat de comparaison (S432) ; et réaliser un traitement de déduplication sur les informations d'enregistrement dans les informations d'enregistrement prétraitées selon le troisième résultat de comparaison (S433).

9. Procédé selon la revendication 8, dans lequel la réalisation d'un traitement de déduplication sur les informations d'enregistrement dans les informations d'enregistrement prétraitées selon le troisième résultat de comparaison (S431) comprend,
en réponse au troisième résultat de comparaison indiquant une similitude, supprimer les informations d'enregistrement prétraitées (S434) ; ou
en réponse au troisième résultat de comparaison indiquant une différence, stocker les informations d'enregistrement prétraitées dans une zone de stockage en attente prédéfinie (S435).

10. Procédé de déduplication de données selon l'une quelconque des revendications 5, 8 ou 9, comprenant en outre,
en réponse à l'achèvement de la traversée des informations d'enregistrement prétraitées dans la zone de stockage de traitement, interchanger la zone de stockage de traitement et la zone de stockage en attente (S510) ;
vider la zone de stockage en attente interchangée et réinitialiser le tableau d'adresses de hachage (S520) ; et
retraverser les informations d'enregistrement prétraitées dans la zone de stockage de traitement interchangée, et réaliser successivement un traitement de déduplication sur les informations d'enregistrement prétraitées dans la zone de stockage de traitement interchangée, jusqu'à ce qu'aucune information d'enregistrement prétraitée ne soit stockée dans la zone de stockage en attente interchangée (S530).

11. Procédé selon l'une quelconque des revendications 1 à 10, dans lequel les informations d'enregistrement satisfaisant à la condition de déduplication sont des informations d'enregistrement dans une plage de données spécifiée par les informations d'opération de déduplication distribuée.

12. Procédé de déduplication de données, qui est réalisé par un noeud de desserte dans une base de données distribuée, comprenant,
acquérir des informations d'opération de requête envoyées par un noeud proxy dans la base de données distribuée, les informations d'opération de requête portant des informations d'opération de déduplication distribuée (S610) ;
prétraiter chaque information d'enregistrement satisfaisant à une condition de déduplication selon les informations d'opération de déduplication distribuée dans les informations d'opération de requête, pour obtenir des informations d'enregistrement prétraitées pour chaque information d'enregistrement (S620), dans lequel les informations d'enregistrement prétraitées comprennent les informations d'enregistrement et une première valeur de hachage générée à partir d'un calcul de hachage sur les informations d'enregistrement ; et
envoyer les informations d'enregistrement prétraitées au noeud proxy, de sorte que le noeud proxy résume les informations d'enregistrement prétraitées dans une zone de stockage de traitement prédéfinie et traverse les informations d'enregistrement prétraitées dans la zone de stockage de traitement, et pour chaque information d'enregistrement prétraitée, réaliser un traitement de déduplication sur les informations d'enregistrement dans les informations d'enregistrement prétraitées selon la première valeur de hachage dans les informations d'enregistrement prétraitées (S630).

13. Procédé selon la revendication 12, dans lequel les informations d'enregistrement prétraitées comprennent en outre une deuxième valeur de hachage générée à partir d'un autre calcul de hachage sur les informations d'enregistrement dans les informations d'enregistrement prétraitées, et les informations d'enregistrement prétraitées permettent au noeud proxy de réaliser un traitement de déduplication sur les informations d'enregistrement dans les informations d'enregistrement prétraitées selon la première valeur de hachage et la deuxième valeur de hachage dans les informations d'enregistrement prétraitées.

14. Procédé selon la revendication 12, dans lequel les informations d'enregistrement satisfaisant à la condition de déduplication sont des informations d'enregistrement dans une plage de données spécifiée par les informations d'opération de déduplication distribuée.

15. Support de stockage lisible par ordinateur, stockant une instruction exécutable par ordinateur qui, lorsqu'elle est exécutée par un processeur, amène le processeur à réaliser le procédé selon une quelconque des revendications 1 à 11, ou le procédé selon une quelconque des revendications 12 à 14.
